# EUROPEAN PATENT APPLICATION

(11) **EP 1 310 299 A2**
(43) Date of publication of application: **14.05.2003**
(21) Application number: 02079605.8
(22) Date of filing: 04.11.2002
(51) Int. Cl.: B01J 19/32, B01D 21/00, B01D 53/84, B01D 53/18, B01D 53/58

(54) **Structured packing material and biological cleaners provided with such a structured packing material**

(30) Priority: 13.11.2001 NL 1019357
(71) Applicant: J.A. Niemeijer B.V., 7591 DB Denekamp (NL)
(72) Inventor: Niemeijer, Johannes Antonius, deceased (NL)

(57) **Abstract**

The invention relates to a standard packing material (1) to be applied in a biological cleaning process, in which a liquid and/or gas to be cleaned is guided in a longitudinal direction through the packing material (1). The packing material is put together of mutually coupled, closed synthetic plates, in which longitudinally arranged profiles have been made, in such a manner that a stack of plates realises a longitudinally arranged tubular structure.

## Description

The invention relates to a packing material to be used in a biological cleaning process, in which a liquid and/or gas to be cleaned is guided in a longitudinal direction through the packing material, on a surface of which it may undergo a physical, chemical or bacteriological reaction process. Packing materials of this kind are known. These known packing materials have been fabricated in such a way that they have a large internal surface area, which enables a compact design. They consist for example of a pack of tubes with a very open structure, fabricated of for example synthetic fibres. Moreover, the known packing materials often have a complex structure, in which the liquid or the gas must follow a complicated path, in a pursue to optimise the interaction on the walls even further.

When a biological process takes place in the packing material, this approach will in the long term almost always cause problems. Especially when fully loaded, when the packing material should perform optimally, the bacterial mass may grow so fast that the entire packing material may block up or even collapse under its own weight. Cleaning is not possible, due to the complex structure. The result is that the entire pack must be replaced, which is an unpleasant and hard job, during which the cleaning of the liquid or the gas is halted.

The packing material according to the invention is characterised in that the packing material is made up of at least substantially closed synthetic plates, provided with longitudinally extending profiles, in such a way that a stack of these plates forms a set of longitudinally extending tubular structures. In this way, a packing material is obtained which has operationally a much larger volume than existing packing materials. On the other hand, it will practically never block up and it demands substantially no maintenance. If, due to exceptional circumstances, the amount of biomass in the packing material has become too large, then the tubular structure can be cleaned with a simple, straight brush. Moreover, the fabrication of the packing material is simple, with existing sheets of synthetic material as the starting material.

A favourable embodiment of the inventive packing material is characterised in that the synthetic plates are provided with connecting means, for coupling the stacked-up plates. In this way, a very light packing material can be realised which nevertheless proves to be very strong due to these mutual interconnections. Preferably, the connecting means comprise projections and holes, designed so that when two plates are connected, the projections of one plate fit into holes of another plate.

A favourable embodiment of the inventive packing material is characterised in that the profiles are designed so that the tubular structures comprise tubes having a hexagonal cross section. The advantage is that the tubular structure can be realised with a minimum of synthetic material, analogous to the well-known honeycomb structure.

A further favourable embodiment of the inventive packing material is characterised in that the profiles are provided with ribs, extending perpendicular to the longitudinal direction, which slightly increases the surface area and which moreover leads to an improved attachment of the biomass. The ribs are shallow, such that if a layer of biomass becomes too heavy, it will slide down the wall due to that weight, in spite of the ribs.

The invention also relates to an air washer provided with packing material as described above, in which the longitudinal direction is chosen at least substantially vertical and in which the air to be cleaned is operationally guided upwards through the packing material, while at the same time washing water is sprayed on top of the packing material.

The invention also relates to a nitrification unit, provided with a packing material as described above, in which the longitudinal direction is chosen at least substantially vertical and in which ammonia containing water is guided through the packing material, in the process of which the ammonia is converted to ammonium salts.

The invention also relates to a denitrification unit, provided with a packing material as described above, in which the longitudinal direction is chosen at least substantially vertical and in which water with ammonium salts dissolved in it is guided through the packing material, in the process of which the ammonium salts are converted to water and nitrogen.

The invention also relates to a laminated thickener, provided with a packing material as described above, in which the longitudinal direction is chosen so as to make an angle of thirty to sixty degrees with the vertical direction, in which water with solid components is guided upwards through the packing material, in the process of which the solid components will settle on the walls of the packing material, will come loose and settle down.

The invention also relates to a cleaning arrangement for cleaning water, comprising a laminated thickener for separating solid components and an air washer for oxygenating the water to be cleaned. It is characterised in that the laminated thickener and/or the air washer comprise a packing material as described above.

The invention also relates to a cleaning arrangement for cleaning air containing ammonia and odorous substances, in the process of which the air is guided through an air washer and subsequently through a nitrification unit and a denitrification unit. It is characterised in that the air washer and or the nitrification unit and/or the denitrification unit and/or the laminated thickener comprise a packing material as described above.

The invention will be further explained with a reference to the following figures, in which:
- Fig. 1A: schematically represents a packing material;
- Fig. 1B: schematically represents the integrated connecting means;
- Fig. 1C: schematically represents in a cross section the integrated connecting means;
- Fig. 2: represents the packing material in perspective;
- Fig. 3: schematically represents the cleaning of air, originating from a composting utility;
- Fig. 4: schematically represents the cleaning of water originating from a fish farm;
- Fig. 5A: schematically represents an alternative cleaning of water originating from a fish farm;
- Fig. 5B: schematically represents a rotating spray nozzle.

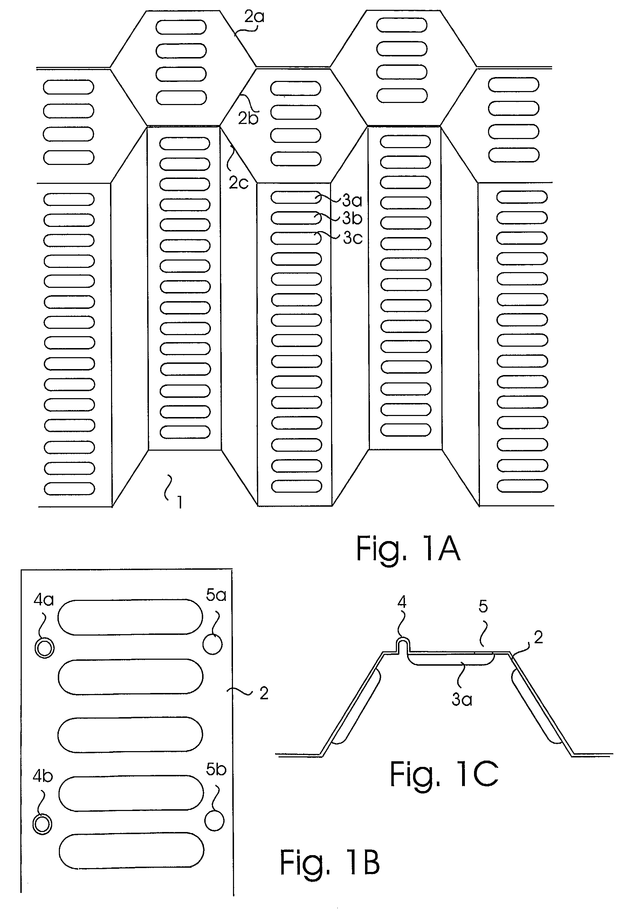

Fig. 1A schematically represents a packing material 1 according to the invention, consisting of plates 2a,2b,2c,.. which have been profiled in such a way that between two plates channels exist, in this embodiment having hexagonal cross sections. In the plates, ribs 3a,3b,3c,.. have been made which increase the effective surface area of packing material 1 and which moreover provide some support to biomass, which will develop under operational conditions on the surface of packing material 1. The ribs are shallow, so that when the layer of biomass becomes too thick, it will come loose and it will leave the packing material on the underside. Consequently, packing material 1 is self-cleaning. If, due to exceptional circumstances, packing material 1 still must be cleaned, this can easily be done by pushing a long, slender brush from the topside through the channels. While doing so, enough biomass will remain behind, also because of the ribs 3a,3b,3c,.. to ensure an immediate functioning of the desired biological processes when the packing material is put into operation again. The plates 2a,2b,2c,.. have a width of for example 1 metre and a height of 0.6 metre. The channels have a width of for example 5 centimetre and the ribs 3a,3b,3c,.. have a height of 3 millimetre. In the embodiment shown here, only two of the six sides of each channel are provided with ribs. If desired, one may further increase the surface area by providing each side with ribs. If larger packing materials are needed, they can easily be realised by coupling the plates shown here to packs having the desired dimensions.

Fig. 1B schematically represents the integrated connecting means on a plate 2, consisting of projections 4a,4b,.. on one side, which may contact a side of a neighbouring plate and of holes 5a,5b,.. on the other side. The diameter of the holes is chosen so that the projections of a neighbouring plate can be inserted when some force is applied, as a result of which packing material 1 will fuse to a whole. The advantage of the connecting means is that the pack can be easily mounted and dismantled. Of course it is also possible to put together a pack by connecting neighbouring plates with the aid of thermal welds.

Fig. 1C schematically represents in a cross section the integrated connecting means in plate 2, consisting of projections 4a,4b,.. and holes 5a,5b,... Moreover the ribs 3a,3b,.. are visible, which are present on all sides of the channel in the embodiment shown here.

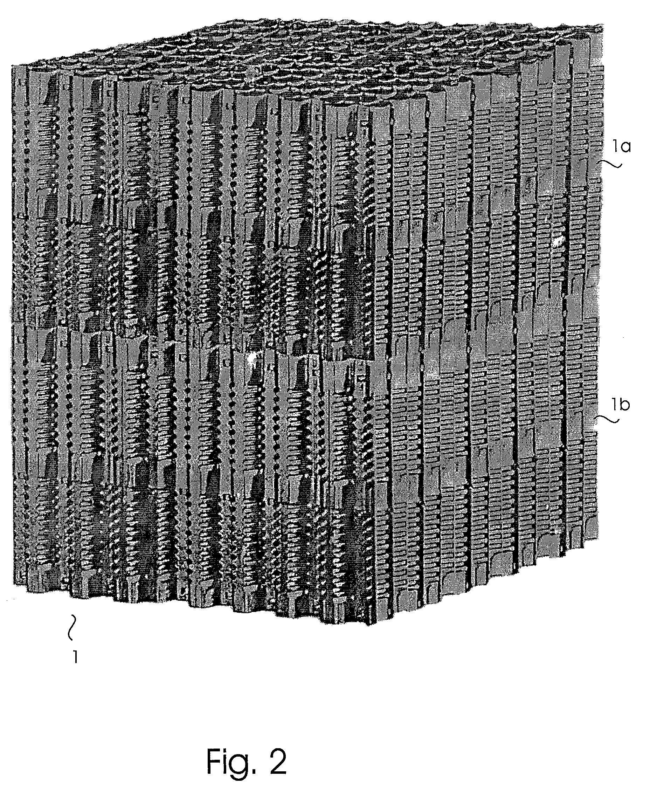

Fig. 2 represents the packing material 1 in perspective, consisting of two stacked up packs 1a,1b, which have been fabricated from standard plates of 1 metre by 0.6 metre, resulting in a packing material of 1.2 m³. The plates are preferably made of a thermoplastic synthetic material, like polyvinyl chloride, polyethylene or polypropylene. The synthetic material is pressed in a molten state out of an extrusion head with a width of for example 10 centimetre, subsequently it is stretched to a width of for example 60 centimetre and guided between two rollers which introduce the desired profiling, after which it is cut into plates with a length of 1 metre.

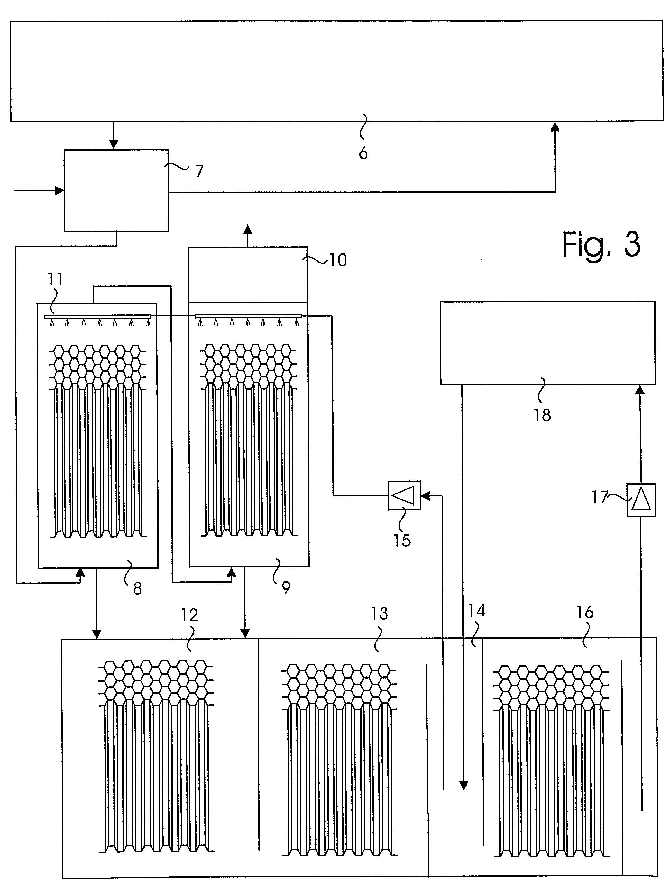

Fig. 3 schematically represents the cleaning of air, originating from for example a composting utility 6. The air comprises much ammonia and odorous substances and cannot be blown into the atmosphere directly. In the embodiment shown here, the air is therefore guided first through a well known air-to-air heat exchanger 7 and subsequently through a first air washer 8, a second air washer 9 and a droplet collector 10, after which the air is blown into the atmosphere. Via the air-to-air heat exchanger 7, fresh air is taken in by a ventilator, not shown here, and supplied to composting utility 6. In air washer 8, the air flows upwards, while on top of it water is atomised with the aid of a number of nozzles 11. In this process, water absorbs the ammonia and the odorous substances and flows downwards along the walls of packing material 12. As is well known in the art, a layer of biomass will settle after some time onto the walls. In this biomass, part of the ammonia is converted into nitrate en nitrites. Water that leaves air washer 8, contains therefore dissolved ammonia, nitrates, nitrites, dissolved odorous substances and dissolved oxygen. Air that leaves air washer 8 on the topside is guided to air washer 9, in which the last remainder of the ammonia is washed out. The air, which is now clean, leaves the arrangement via droplet collector 10.

Water that leaves air washers 8,9, is collected in a first nitrification unit 12, a vessel that is almost entirely filled with a packing material according to the invention, through which the water is guided from the top towards the bottom. Onto this packing material biomass will form as well, which converts ammonia to nitrates and in nitrites. In this process, the dissolved oxygen is substantially completely used. In the embodiment shown here, a second nitrification unit 13 is added, through which the water is guided from the bottom towards the top and in which the last remainder of the ammonia is converted. The water then flows into a buffer space 14, from which it is guided to the nozzles 11 via a pump 15.

Part of the water in buffer space 14 flows from the bottom side to the top side through packing material in a denitrification unit 16, in which in an anaerobe environment in a layer of biomass onto the packing material the nitrates and the nitrites are converted to nitrogen and water. The flow through denitrification unit 16 is taken care of by a pump 17, which also guides the water through a second buffer space 18 which may be provided with a temperature control with which the biological processes can be optimised.

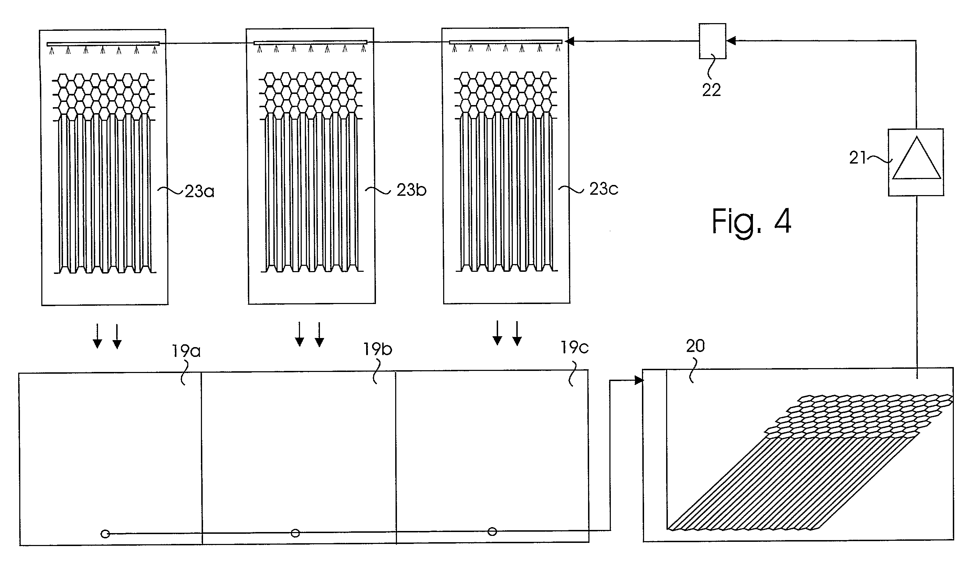

Fig. 4 schematically represents the cleaning of water originating from for example a fish farm, in which the fish is kept in tanks 19a,19b,19c. Water from the tanks is guided towards a laminated thickener 20, in which it passes a packing material from the bottom side towards the topside. The packing material is positioned slantwise, in such a way that an angle between the channels of the packing material and the normal amounts to 30-60 degrees. Under those circumstances, solid particles will form a deposit on the wall of the packing material. If the layer has locally reached a given thickness, then it will slide down the relatively slippery surface of the channel and land as a deposit onto the bottom of laminated thickener 20. The packing material can easily be realised by cutting a standard packed up pack slantwise and by connecting the two slantwise cut pieces to the top side and the bottom side of a standard packed up pack.

The water which is free of solid particles now, is subsequently pumped by pump 21 towards a filter 22, well known in the art, and then supplied to the nozzles of three air washers 23a,23b,23c, which are each provided with packing material. The water, dispersed to fine droplets, will absorb oxygen and will then end up on a wall of the packing material. On that wall a layer of biomass will finally form, in which the ammonia, present in the water, will be converted to relatively harmless nitrates and nitrites. This water flows subsequently into the tanks 19a, 19b, 19c.

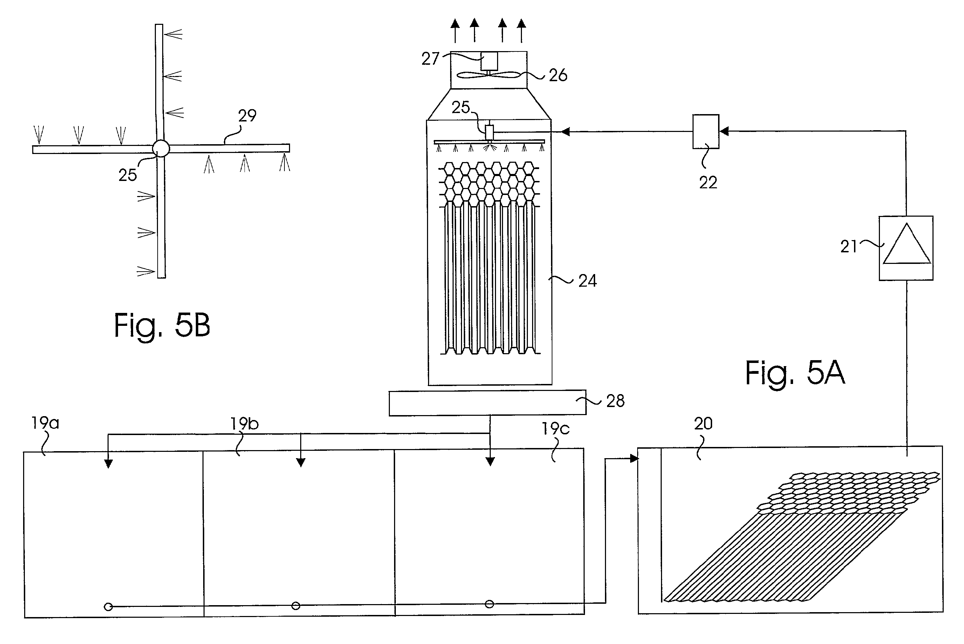

Fig. 5A schematically represents an alternative cleaning of water originating from for example a fish farm, in which the fish is kept in tanks 19a,19b,19c. Water from the tanks is guided towards a laminated thickener 20, in which it passes a packing material from the bottom side towards the topside. The packing material is positioned slantwise, in such a way that an angle between the channels of the packing material and the normal amounts to 30-60 degrees. Under those circumstances, solid particles will form a deposit on the wall of the packing material. If the layer has locally reached a given thickness, then it will slide down the relatively slippery surface of the channel and land as a deposit onto the bottom of laminated thickener 20. The packing material can easily be realised by cutting a standard packed up pack slantwise and by connecting the two slantwise cut pieces to the top side and the bottom side of a standard packed up pack.

The water, which is free of solid particles now, is subsequently pumped by pump 21 towards a filter 22, well known in the art, and then supplied to a system of nozzles in an air washer 24, provided with packing material. In order to increase the efficiency of air washer 24, water is supplied to the system of nozzles via a rotatable coupling 25, well known in the art, with the outlet openings of the nozzles directed in such a way that the system of nozzles will start to rotate. Moreover, a ventilator 26 is positioned in air washer 24, driven by a motor 27, which substantially increases the amount of air that flows through the air washer. As a result of these measures, the activity of the layer of biomass on the wall of the packing material will also increase significantly, which means that the speed with which ammonia present in the water will be converted will also increase. Subsequently, the purified water is collected in a tank 28 and distributed over tanks 19a,19b,19c.

Fig. 5B schematically represents a system of rotating spray nozzles, mounted on a cross 29, made of pipes, which in turn is carried by a rotatable coupling 25. As the nozzles are mounted perpendicular to cross 29, the water that pours out will generate a torque, which will make cross 29 rotate spontaneously. In this manner, a good distribution of water is realised across the packing material of air washer 24.

## Claims

1. Packing material to be used in a biological cleaning process, in which a liquid and/or gas to be cleaned is guided in a longitudinal direction through the packing material, on a surface of which it can may undergo a physical, chemical or bacteriological reaction process, **characterised in that** the packing material is made up of at least substantially closed synthetic plates, provided with longitudinally extending profiles, in such a way that a stack of these plates forms a set of longitudinally extending tubular structures.

2. Packing material according to claim 1, **characterised in that** the synthetic plates are provided with connecting means, for coupling the stacked-up plates.

3. Packing material according to claim 2, **characterised in that** the connecting means comprise projections and holes, designed so that when two plates are connected, the projections of one plate fit into holes of another plate.

4. Packing material according to claim 1 or 2, **characterised in that** the profiles are designed so that the tubular structures comprise tubes having a hexagonal cross section.

5. Packing material according to claim 1 or 2, **characterised in that** the profiles are provided with ribs, extending perpendicular to the longitudinal direction.

6. Air washer provided with a packing material according to one of the claims 1 to 5, in which the longitudinal direction is chosen at least substantially vertical and in which the air to be cleaned is operationally guided upwards through the packing material, while at the same time washing water is sprayed on top of the packing material.

7. Nitrification unit, provided with a packing material according to one of the claims 1 to 5, in which the longitudinal direction is chosen at least substantially vertical and in which ammonia containing water is guided through the packing material, in the process of which the ammonia is converted to ammonium salts.

8. Denitrification unit, provided with a packing material according to one of the claims 1 to 5, in which the longitudinal direction is chosen at least substantially vertical and in which water with ammonium salts dissolved in it is guided through the packing material, in the process of which the ammonium salts are converted to water and nitrogen.

9. Laminated thickener, provided with a packing material according to one of the claims 1 to 5, in which the longitudinal direction is chosen so as to make an angle of thirty to sixty degrees with the vertical direction, in which water with solid components is guided upwards through the packing material, in the process of which the solid components will settle on the walls of the packing material, will come loose and settle down.

10. Cleaning arrangement for cleaning water, comprising a laminated thickener for separating solid components and an air washer for oxygenating the water to be cleaned, **characterised in that** the laminated thickener and/or the air washer comprise a packing material according to one of the claims 1 to 5.

11. Cleaning arrangement for cleaning air containing ammonia and odorous substances, in the process of which the air is guided through an air washer and subsequently through a nitrification unit and a denitrification unit, **characterised in that** the air washer and or the nitrification unit and/or the denitrification unit and/or the laminated thickener comprise a packing material according to one of the claims 1 to 5.
